# EUROPÄISCHE PATENTSCHRIFT

(11) **EP 2 782 725 B1**
(45) Veröffentlichungstag und Bekanntmachung des Hinweises auf die Patenterteilung: **12.10.2016**
(21) Anmeldenummer: 12788567.1
(22) Anmeldetag: 22.11.2012
(51) Int. Cl.: B29C 65/00, B29C 65/48, B29C 65/78, B29C 65/10, B05B 1/24, B27D 5/00, B29C 63/00, B29C 65/16

(54) **DÜSENANORDNUNG FÜR EINE KANTENSTREIFENAUFBRINGVORRICHTUNG ZUR BEAUFSCHLAGUNG EINES KLEBERLOSEN WÄRMEAKTIVIERBAREN ODER MIT HEIßKLEBER BESCHICHTETEN KANTENSTREIFENS ODER WERKSTÜCKS MIT HEIßLUFT UND KANTENSTREIFENAUFBRINGVORRICHTUNG MIT EINER DÜSENANORDNUNG**
BLOWPIPES ARRANGEMENT FOR AN EDGEBANDING DEVICE TO BLOW WARM AIR ON THE BANDS WITH EITHER AN ACTIVABLE COVER LAYER OR A HOT-MELT ADHESIVE OR ON THE WORKPIECE AND CORRESPONDING EDGEBANDING DEVICE
ARRANGEMENT DE TUYÈRES POUR UN DISPOSITIF DE REVETÊMENT LATÉRAL PAR BANDES POUR ALIMENTATION D'AIR CHAUD SUR LES BANDES COUVERTES D'UN REVETEMENT ACTIVABLE PAR CHALEUR OU DE THERMOCOLLE OU SUR LA PIECE ET DISPOSITIF DE COLLAGE DE BANDES COMPRENANT UN TEL ARRANGEMENT

(30) Priorität: 24.11.2011 DE 102011055690; 20.04.2012 DE 102012103508
(43) Veröffentlichungstag der Anmeldung: 01.10.2014
(73) Patentinhaber: Kluge, Holger, 57392 Schmallenberg (DE)
(72) Erfinder: Kluge, Holger, 57392 Schmallenberg (DE)
(74) Vertreter: Graefe, Jörg
(86) Internationale Anmeldenummer: PCT/EP2012/073379
(87) Internationale Veröffentlichungsnummer: WO 2013/076205

(56) Entgegenhaltungen:
- WO-A1-2006/101630
- WO-A1-2008/090056
- FR-A1- 2 318 736

## Beschreibung

Die vorliegende Erfindung bezieht sich auf eine Düsenanordnung für eine Kantenstreifenaufbringvorrichtung zur Beaufschlagung eines kleberlosen, wärmeaktivierbaren oder mit Heißkleber beschichteten Kantenstreifens oder Werkstücks mit Heißluft nach dem Oberbegriff des Anspruchs 1. Darüber hinaus betrifft die vorliegende Erfindung eine Kantenstreifenaufbringvorrichtung mit einer Düsenanordnung. Eine solche Düsenanordnung ist aus dem Dokument WO 2008090056 A1 bekannt. Aus dem Stand der Technik sind Kantenstreifenaufbringvorrichtungen (häufig auch als Kantenanleimvorrichtungen bezeichnet), mittels derer Kantenstreifen auf die Schmalseiten eines Werkstücks aufgebracht werden können, in unterschiedlichen Ausführungsformen bekannt. Die Kantenstreifen, die häufig auch als Umleimer bezeichnet werden, können zum Beispiel einseitig einen wärmeaktivierbaren Kleber aufweisen. Dieser Kleber wird in der Kantenstreifenaufbringvorrichtung durch Beaufschlagung mit Heißluft, oder Heißgase aktiviert, so dass nach dem Aufbringen und Andrücken des Kantenstreifens auf die Schmalseite des Werkstücks eine stoffschlüssige Fügeverbindung des Kantenstreifens mit dieser Schmalseite geschaffen wird. Teilweise werden die Kantenstreifen erst in der Kantenstreifenaufbringvorrichtung einseitig mit einem Kleber versehen und anschließend mit der Schmalseite des Werkstücks, das insbesondere ein Holzwerkstück sein kann, stoffschlüssig verbunden. Es hat sich gezeigt, dass die Verwendung von Klebern bei der Aufbringung von Kantenstreifen auf die Schmalseiten eines Werkstücks mit einigen Nachteilen verbunden ist. Neben prozesstechnischen Schwierigkeiten besteht häufig das Problem, dass die Kleberschicht nach dem Aufbringen des Kantenstreifens auf das Werkstück für einen Betrachter sichtbar bleibt und so das optische Erscheinungsbild beeinträchtigt.

Um den vorstehend genannten Problemen abzuhelfen, wurden mittlerweile kleberlose, wärmeaktivierbare Kantenstreifen entwickelt, die zum Beispiel durch Beaufschlagung mit Laserlicht oder durch Plasmaverfahren aktiviert werden können. Diese Kantenstreifen bestehen aus zwei Schichten aus unterschiedlichen - vorzugsweise koextrudierten - Kunststoffen. Durch die Beaufschlagung mit Laserlicht wird die der Schmalseite des Werkstücks zugewandte Kunststoffschicht (kurz: Funktionsschicht) aufgeschmolzen und kann mit der Schmalseite verklebt werden. Die Kunststoffschicht auf der Sichtseite (Außenseite) des Kantenstreifens wird demgegenüber durch die Beaufschlagung mit dem Laserlicht nicht verändert. Da sich die beiden Kunststoffschichten zweckmäßigerweise in ihrer Farbgebung nicht unterscheiden, wird ein fugenloses, einheitliches optisches Erscheinungsbild geschaffen. Laservorrichtungen zum Aktivieren der Funktionsschicht des Kantenstreifens ermöglichen zwar hohe Arbeitsgeschwindigkeiten, sind aber verhältnismäßig teuer und prozesstechnisch aufwändig zu betreiben. Die aus dem Stand der Technik bereits bekannte Möglichkeit zur Aktivierung der Funktionsschicht durch ein Plasma ist ebenfalls prozesstechnisch sehr aufwändig und ermöglicht nur vergleichsweise geringe Arbeitsgeschwindigkeiten. Daher wurden in der Vergangenheit bereits einige Anstrengungen unternommen, um die Funktionsschicht des Kantenstreifens mittels einer Düsenanordnung mit unter Druck stehender Heißluft mit einer Temperatur von etwa 600° C zu beaufschlagen und zu aktivieren. Im Vergleich zur Laser- und Plasmaaktivierung ist eine derartige Vorgehensweise prozesstechnisch einfacher und kostengünstiger. Die bislang erreichbaren Arbeitsgeschwindigkeiten sind jedoch noch nicht zufriedenstellend. So sind für industrielle Anwendungen Arbeitsgeschwindigkeiten von 20 m/min und mehr wünschenswert.

Die FR 2 318 736 A1 offenbart eine Vorrichtung zum Anleimen von Folien oder Furnieren auf plattenförmige Werkstücke, die aus einem Holzwerkstoff hergestellt sind. Diese Vorrichtung umfasst eine Düsenanordnung mit in einer (horizontalen) Vorschubrichtung des Kantenstreifens gleichmäßig verteilt angeordneten Düsen, die jeweils nur eine einzige Luftaustrittsöffnung aufweisen, durch die die durch Zuführungen zugeführte erwärmte Luft ausgetragen werden kann. Die Düsenanordnung ist nicht für eine Verwendung unterschiedlich breiter Kantenstreifen vorgesehen.

Aus der WO 2008/090056 A1 ist eine Vorrichtung zur Herstellung von Kunststoffsäcken bekannt, die eine Düsenanordnung mit einem Düsenkörper aufweist. Der Düsenkörper umfasst Luftaustrittsöffnungen, die mit Hilfe von Verschlussstücken selektiv geöffnet beziehungsweise verschlossen werden können, so dass gezielt nur bestimmte Bereiche des zur Herstellung der Kunststoffsäcke verwendeten Kunststoffmaterials mit Heißluft beaufschlagt werden können.

Der vorliegenden Erfindung liegt die Aufgabe zu Grunde, eine Düsenanordnung sowie eine Kantenstreifenaufbringvorrichtung der eingangs genannten Art zur Verfügung zu stellen, die eine effiziente Erwärmung und Aktivierung der Funktionsschicht von kleberlosen, wärmeaktivierbaren oder einseitig mit einem aktivierbaren Heißkleber (Schmelzkleber) vorbeschichteten Kantenstreifen oder Werkstücken ermöglichen, so dass hohe Arbeitsgeschwindigkeiten erreicht werden können.

Hinsichtlich der Düsenanordnung wird diese Aufgabe durch eine Düsenanordnung mit den Merkmalen des Anspruchs 1 gelöst. Hinsichtlich der Kantenstreifenaufbringvorrichtung wird diese Aufgabe durch eine Kantenstreifenaufbringvorrichtung mit den Merkmalen des Anspruchs 11 gelöst. Die Unteransprüche betreffen vorteilhafte Weiterbildungen der Erfindung.

Eine Düsenanordnung umfasst gemäß Anspruch 1 einen Düsenkörper mit
- mindestens einem Lufteinlasskanaf, der an einen Heißlufterzeuger anschließbar ist, so dass dem Düsenkörper während des Betriebs der Kantenstreifenaufbringvorrichtung unter Druck stehende Heißluft zugeführt werden kann,
- mindestens zwei Gruppen von Luftaustrittsöffnungen, wobei die Luftaustrittsöffnungen auf einer dem Kantenstreifen zugewandten Luftaustrittsfläche des Düsenkörpers in vertikaler Richtung senkrecht zu einer Vorschubrichtung des Kantenstreifens voneinander beabstandet ausgebildet sind und mit dem mindestens einen Lufteinlasskanal in Strömungsverbindung stehen, so dass die mindestens zwei Gruppen von Luftaustrittsöffnungen in Vorschubrichtung des Kantenstreifens voneinander beabstandet sind und die dem Düsenkörper zugeführte Heißluft aus den Luftaustrittsöffnungen ausströmen kann und eine wärmeaktivierbare Funktionsschicht des Kantenstreifens beaufschlagen kann,
- einer der Anzahl der Gruppen von Luftaustrittsöffnungen entsprechenden Anzahl von Verschlussorganen, die so ausgebildet sind, dass zumindest einige der Luftaustrittsöffnungen wahlweise geöffnet oder geschlossen werden können, so dass die Heißluftaustrittsströmung an unterschiedliche Breiten des zugeführten Kantenstreifens anpassbar ist.

Darüber hinaus ist erfindungsgemäß vorgesehen, dass der Düsenkörper eine der Anzahl der Gruppen der Luftaustrittsöffnungen entsprechende Anzahl von vorzugsweise hohlzylindrisch ausgebildeten Luftauslasskanälen aufweist, die mit dem mindestens einen Lufteinlasskanal in Strömungsverbindung stehen und die Luftaustrittsöffnungen umfassen.

Ferner sind die Verschlussorgane erfindungsgemäß so ausgebildet, dass sie in den Luftauslasskanälen zum Verschließen zumindest einiger der Luftaustrittsöffnungen axial geführt werden können. Die Verschlussorgane können insbesondere zylindrisch geformt sein.

Erfindungsgemäß umfasst die Düsenanordnung weiterhin eine Verschlussorganhalterung, an der die Verschlussorgane derart angebracht sind, dass sie simultan in den Luftauslasskanälen verstellbar sind. Dadurch wird eine einfach handhabbare Verstellung der Verschlussorgane und eine einfache Anpassung der Heißluftaustrittscharakteristik an unterschiedliche Kantenbreiten ermöglicht. Alternativ besteht auch die Möglichkeit, dass die Düsenanordnung eine Verschlussorganhalterung umfasst, an der die. Verschlussorgane derart angebracht sind, dass zumindest eines der Verschlussorgane unabhängig von den übrigen Verschlussorganen verstellbar ist.

Die erfindungsgemäße Düsenanordnung ermöglicht eine effiziente Erwärmung und Aktivierung der Funktionsschicht von kleberlosen, wärmeaktivierbaren Kantenstreifen, die aus (mindestens) zwei vorzugsweise koextrudierten Kunststoffschichten bestehen, vor dem Aufbringen auf eine Schmalseite des Werkstücks. Ebenfalls können Kantenstreifen (oder auch Werkstücke), die einseitig mit einem Heißkleber vorbeschichtet sind, auf sehr effiziente Weise erwärmt werden. Die Luftaustrittsöffnungen können insbesondere zylindrisch geformt sein und weisen vorzugsweise einen Durchmesser von etwa 1 bis 1,5 mm und eine Tiefe im Düsenkörper von etwa 1,5 mm auf. Dadurch wird erreicht, dass die dem Düsenkörper während des Betriebs zugeführte, unter Druck stehende Heißluft, die eine Temperatur bis etwa 600° C aufweist, punktuell in die Funktionsschicht des Kantenstreifens eingetragen werden kann, so dass diese wirksam aufgeschmolzen werden kann, bevor der Kantenstreifen auf der Schmalseite des Werkstücks zu Anlage gelangt und stoffschlüssig mit dieser verbunden wird. Die Verschlussorgane ermöglichen eine einfache Anpassung der Heißluftaustrittsströmung an unterschiedliche Breiten des zugeführten Kantenstreifens. Es hat sich gezeigt, dass bei einer Ausgestaltung des Grundkörpers mit zwei Gruppen von Luftaustrittsöffnungen, die in der vorstehend beschriebenen Weise ausgestaltet sind, Fördergeschwindigkeiten des Kantenstreifens in der Kantenstreifenaufbringvorrichtung von bis zu 20 m/min erreicht werden können. Eine Ausführungsform des Grundkörpers mit drei (oder mehr) Gruppen von Luftaustrittsöffnungen ist etwa 15 mm länger und insbesondere für Kantenstreifenaufbringvorrichtungen vorgesehen, die besonders hohe Arbeitsgeschwindigkeiten von mehr als 20 m/min haben, um im Ergebnis eine höhere Wärmeabgabe zu realisieren. Bei einer derartigen Ausführungsform mit drei (oder mehr) Gruppen von Luftaustrittsöffnungen sind Arbeitsgeschwindigkeiten von etwa 25 m/min ohne besonderen Aufwand realisierbar.

Um die Heißluftverteilung innerhalb des Düsenkörpers zu verbessern und einen homogenen Heißluftaustritt zu erreichen, wird in einer besonders vorteilhaften Ausführungsform vorgeschlagen, dass der Düsenkörper eine Mehrzahl vorzugsweise hohlzylindrisch geformter Luftverteilungskanäle, die sich in Querrichtung durch den mindestens einen Lufteinlasskanal-und durch die Luftauslasskanäle erstrecken, umfasst. Ferner wird durch diese Maßnahme erreicht, dass der Düsenkörper auf Grund der Vielzahl von Lufteinlasskanälen, Luftverteilungskanälen und Luftauslasskanälen nahezu die Eigenschaften eines Hohlkörpers aufweist. Der Düsenkörper besitzt somit eine relativ geringe Masse, so dass der einströmenden Heißluft in vorteilhafter Weise anfangs nur eine relativ kleine Menge Wärmeenergie für das Erwärmen des Materials des Düsenkörpers entzogen wird.

Um die Führung des Kantenstreifens zu verbessern, sieht eine besonders bevorzugte Ausführungsform vor, dass die Düsenanordnung ein Kantenstreifenniederhaltemittel aufweist, das so ausgebildet ist, dass es eine obere Kante des Kantenstreifens an dem Düsenkörper entlang führen kann. Auf einer Grundplatte der Kantenstreifenaufbringvorrichtung kann ein plattenförmiges Kantenstreifenführungsmittel, das zum Beispiel eine Materialstärke von etwa 1,5 mm aufweisen kann, derart angeordnet sein, dass ein unterer Randabschnitt des Kantenstreifens zwischen dem Kantenstreifenführungsmittel und der Luftaustrittsfläche des Düsenkörpers geführt werden kann.

Um die Handhabung weiter zu vereinfachen, besteht in einer besonders vorteilhaften Ausführungsform die Möglichkeit, dass die Düsenanordnung ein Verbindungsmittel umfasst, mittels dessen das Kantenstreifenniederhaltemittel und die Verschlussorganhalterung miteinander verbunden sind. Dadurch wird eine Anpassung der Düsenanordnung an unterschiedlich breite Kantenstreifen auf besonders einfache Weise ermöglicht, da in einem Arbeitsschritt das Kantenniederhaltemittel und die Verschlussorgane verstellt und an die Kantenstreifenbreite angepasst werden können. Um die Herstellung zu vereinfachen, können die Verschlussorganhalterung, das Verbindungsmittel sowie das Kantenstreifenniederhaltemittel integral als einstückiges Bauteil ausgebildet sein.

Um die Führung des Kantenstreifens einlaufseitig zu verbessern, wird in einer bevorzugten Ausführungsform vorgeschlagen, dass der Düsenkörper in einem Einlaufbereich des Kantenstreifens einen abschnittsweise angeschrägten, sich in Vorschubrichtung aufweitenden, vorzugsweise abschnittsweise keilförmig angeschrägten, Führungsabschnitt aufweist. Um das "Einfädeln" des Kantenstreifens zu erleichtern, kann das Kantenstreifenführungsmittel in einem dem keilartigen Führungsabschnitt gegenüberliegenden Bereich angeschrägt ausgebildet sein.

In einer besonders bevorzugten Ausführungsform besteht die Möglichkeit, dass der Führungsabschnitt einen sich in Vorschubrichtung des Kantenstreifens aufweitenden Schrägflächenabschnitt sowie einen sich daran anschließenden, sich in vertikaler Richtung erstreckenden und bezüglich der Luftaustrittsfläche des Düsenkörpers erhabenen, vorzugsweise um etwa 1,5 mm erhabenen, Abstandshalteabschnitt aufweist. Diese Ausgestaltung des einlaufseitigen Führungsabschnitts mit dem Abstandshalteabschnitt sorgt dafür, dass beim Anliegen des Kantenstreifens kein direkter Kontakt mit der Luftaustrittsfläche des Düsenkörpers besteht, der unter Umständen zu einem Verschmieren der erwärmten und dadurch aufgeschmolzenen Funktionsschicht des Kantenstreifens auf dem Düsenkörper führen könnte. Zudem wird erreicht, dass die Heißluft nicht in den Einlaufbereich des Kantenstreifens, sondern nur auf die Funktionsschicht des Kantenstreifens sowie in einen Auslaufbereich für den Kantenstreifen in Richtung des Werkstücks strömen kann.

Um die Führung des Kantenstreifens nach dem Erwärmen und Aufschmelzen der Funktionsschicht zu verbessern, wird in einer besonders bevorzugten Ausführungsform vorgeschlagen, dass der Düsenkörper in Vorschubrichtung des Kantenstreifens hinter der Luftaustrittsfläche einen sich verjüngenden, vorzugsweise zumindest abschnittsweise keilartig geformten Auslaufbereich aufweist.

Vorteilhaft kann die Düsenanordnung ein sich in horizontaler Richtung erstreckendes Führungsmittel für den Kantenstreifen aufweisen, das vorzugsweise durch einen Stahldraht gebildet ist, der an einem dem Kantenstreifen zugewandten Bereich mit dem Düsenkörper verbunden ist und sich insbesondere über die gesamte Länge der Luftaustrittsfläche und des Auslaufbereichs des Düsenkörpers erstreckt. Dieses Führungsmittel sorgt in vorteilhafter Weise zusätzlich dafür, dass die Funktionsschicht des Kantenstreifens die Luftaustrittsfläche des Düsenkörpers während des Betriebs nicht berührt.

Der hier vorgestellte Düsenkörper der Düsenanordnung kann vorzugsweise einstückig aus einem hitzebeständigen Stahlwerkstoff hergestellt sein, um die Herstellungskosten der Düsenanordnung zu verringern.

Gemäß einer weiteren vorteilhaften Ausführungsform, die sich insbesondere für Kantenstreifen mit einem aktivierbaren Heißkleber (Schmelzkleber) eignet, kann der Düsenkörper eine weitere Gruppe von Luftaustrittsöffnungen umfassen, die vorzugsweise in dem sich abschnittsweise verjüngenden, keilartig geformten Auslaufbereich für den Kantenstreifen ausgebildet ist. Diese Luftaustrittsöffnungen können zum Beispiel oval oder auch kreisrund geformt sein. Diese Luftaustrittsöffnungen im Auslaufbereich des Düsenkörpers dienen dem Zweck der Nachaktivierung des Heißklebers des Kantenstreifens für die letzten etwa 10 cm des zu bearbeitenden Werkstücks. Durch diese Nachaktivierung kann das Klebeergebnis wesentlich verbessert werden, so dass beim Verleimen nahezu eine so genannte Nullfuge und damit ein optisch sehr hochwertiges Verleimungsbild erhalten werden kann. Diese zusätzliche Gruppe von Luftaustrittsöffnungen steht vorzugsweise mit derjenigen Gruppe von Luftausströmöffnungen in Strömungsverbindung, die auf der ebenen Luftaustrittsfläche des Düsenkörpers an den keilförmigen Auslaufbereich angrenzt. Diese Variante der Düsenanordnung eignet sich in besonders vorteilhafter Weise für die Aktivierung herkömmlicher, einseitig mit einem Heißkleber versehener Kantenstreifen. Die Luftaustrittsöffnungen der beiden vorstehend genannten, miteinander in Strömungsverbindung stehenden Gruppen, die mit einem separaten Verschlussorgan unabhängig von den anderen Gruppen von Luftaustrittsöffnungen geöffnet beziehungsweise geschlossen werden können, dienen ausschließlich dem Zweck der Nachaktivierung des Heißklebers des Kantenstreifen für die letzten etwa 10 cm des zu bearbeitenden Werkstücks.

Während des Betriebs der Kantenstreifenaufbringvorrichtung und des Aufbringens des Kantenstreifens auf das Werkstück verbleibt das Verschlussorgan, das den beiden vorstehend genannten, miteinander in Strömungsverbindung stehenden Luftaustrittsöffnungen zugeordnet ist, zunächst in seiner "unteren" Stellung (Schließstellung), in der es den Heißluftaustritt aus diesen beiden Gruppen von Luftaustrittsöffnungen verhindern kann. Während des Betriebs strömt die Heißluft also zunächst nur durch übrige(n) Gruppe(n) von Luftaustrittsöffnungen auf die mit der Heißluft zu erwärmende Fläche des Kantenstreifens. Der Betrieb der Kantenstreifenaufbringvorrichtung wird so gesteuert, dass der diesen beiden Gruppen von Luftaustrittsöffnungen zugeordnete Luftaustrittskanal durch axiales Verschieben des dritten Verschlussorgans erst dann geöffnet wird, wenn die letzten etwa 10 cm des Werkstücks die Düsenanordnung der Kantenstreifenaufbringvorrichtung passieren. Dann strömt die Heißluft auch durch die Luftaustrittsöffnungen dieser beiden Gruppen. Dadurch wird in vorteilhafter Weise erreicht, dass der Kantenstreifen auch im Bereich der letzten etwa 6 cm bis 10 cm des Werkstücks zuverlässig und in einer hohen Qualität verleimt werden kann. Ansonsten würden die letzten circa 6 cm bis 10 cm des auf das Werkstück aufzubringenden Kantenstreifens nur zufriedenstellend und somit nicht optimal erwärmt und aktiviert. Um ein Überhitzen von übrigen Anlagenteilen (zum Beispiel Andruckrollen oder dergleichen) zu vermeiden, wird das betreffende Verschlussorgan anschließend sofort wieder in seine Schließstellung überführt, so dass keine Heißluft mehr aus diesen, lediglich für die Nachaktivierung vorgesehenen Luftaustrittsöffnungen austreten kann.

Eine erfindungsgemäße Kantenstreifenaufbringvorrichtung zeichnet sich durch mindestens eine Düsenanordnung nach einem der Ansprüche 1 bis 10 aus. Sie ermöglicht eine effiziente Erwärmung der Funktionsschicht von kleberlosen, wärmeaktivierbaren Kantenstreifen bei hohen Arbeitsgeschwindigkeiten, so dass die Schmalseiten von Werkstücken sehr kosteneffizient mit Kantenstreifen versehen werden können. Auch für herkömmliche, mit einem aktivierbaren Heißkleber (Schmelzkleber) versehene Kantenstreifen oder Werkstücke ist die erfindungsgemäße Kantenstreifenaufbringvorrichtung geeignet und liefert qualitativ hochwertige Arbeitsergebnisse.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Darstellung einer Düsenanordnung zur Beaufschlagung eines kleberlosen, wärmeaktivierbaren Kantenstreifens mit Heißluft,
- Fig. 2: eine perspektivische Vorderansicht eines Düsenkörpers der Düsenanordnung gemäß Fig. 1,
- Fig. 3: eine perspektivische Rückansicht des Düsenkörpers gemäß Fig. 2,
- Fig. 4: eine perspektivische Darstellung eines Düsenkörpers, der gemäß einem zweiten Ausführungsbeispiel ausgeführt ist,
- Fig. 5: einen Längsschnitt durch den Düsenkörper gemäß Fig. 4,
- Fig. 6: eine perspektivische Ansicht einer Düsenanordnung gemäß einem weiteren Ausführungsbeispiel der verlegenden Erfindung.

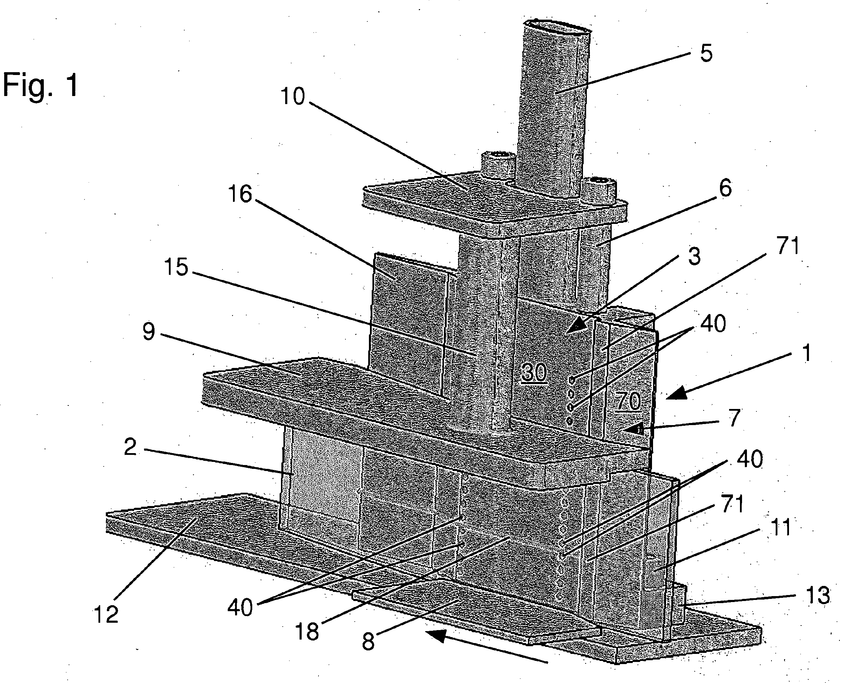

Unter Bezugnahme auf Fig. 1 soll nachfolgend der grundlegende konstruktive Aufbau einer Düsenanordnung 1 für eine Kantenstreifenaufbringvorrichtung zur Beaufschlagung eines kleberlosen, wärmeaktivierbaren Kantenstreifens 2 mit Heißluft gemäß einem bevorzugten Ausführungsbeispiel der vorliegenden Erfindung näher erläutert werden. Die Düsenanordnung 1 umfasst einen Düsenkörper 3, der in diesem Ausführungsbeispiel einstückig aus einem hitzebeständigen Stahlwerkstoff hergestellt ist. Der Düsenkörper 3 ist so geformt, dass er quer zu einer, in Fig. 1 durch einen Pfeil angedeuteten Vorschubrichtung des Kantenstreifens 2 vergleichsweise schmal ausgeführt ist, da der in der Kantenstreifenaufbringvorrichtung für die Positionierung der Düsenanordnung 1 zur Verfügung stehende Platz üblicherweise relativ knapp bemessen ist. Die Düsenanordnung 1 wird in der Kantenstreifenbearbeitungsvorrichtung so angeordnet, dass sie in Vorschubrichtung des Kantenstreifens 2 unmittelbar vor einer ersten Kantenstreifenandruckrolle, mittels derer der Kantenstreifen 2 an die Schmalseite des Werkstücks angedrückt werden kann, positioniert ist. Der Kantenstreifen 2, der aus Vereinfachungsgründen in Fig. 1 transparent dargestellt ist, besteht aus (mindestens) zwei Schichten aus unterschiedlichen - vorzugsweise koextrudierten - Kunststoffen. Eine erste Schicht (nachfolgend: Funktionsschicht), die dem Düsenkörper 3 der Düsenanordnung 1 und damit auch der Schmalseite des Werkstücks zugewandt ist, besteht aus einem Kunststoff, der durch eine Beaufschlagung mit unter Druck stehender Heißluft aufgeschmolzen und anschließend mit der Schmalseite des Werkstücks stoffschlüssig verbunden werden kann. Die Kunststoffschicht auf der Sichtseite (Außenseite) des Kantenstreifens 2 ist demgegenüber so ausgebildet, dass sie sich durch die Beaufschlagung mit der Heißluft nicht verändert, insbesondere nicht aufschmilzt. Beide Kunststoffschichten des Kantenstreifens 2 unterscheiden sich zweckmäßigerweise nicht in der Farbgebung, so dass nach dem Aufbringen des Kantenstreifens 2 auf das Werkstück ein einheitliches optisches Erscheinungsbild ohne störende Fugen geschaffen wird. Die Verwendung eines mit Heißkleber beschichteten Kantenstreifens 2 ist ebenfalls möglich.

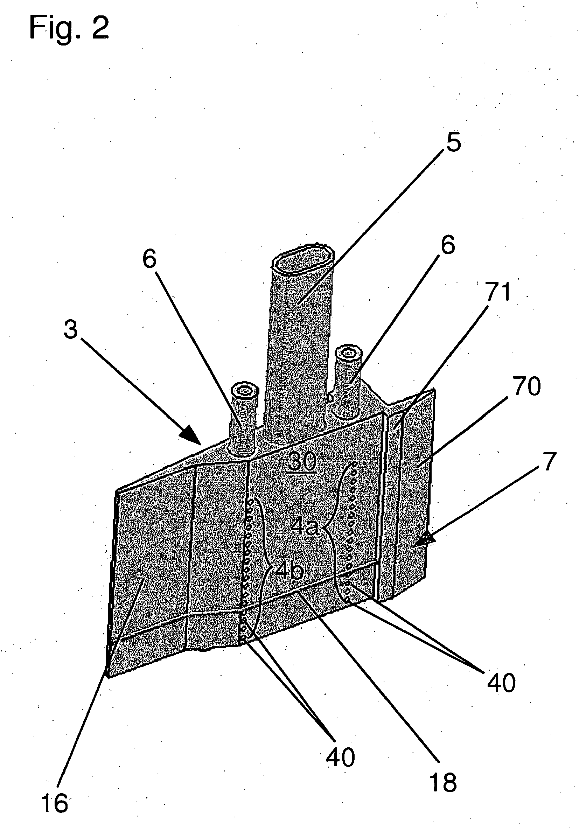

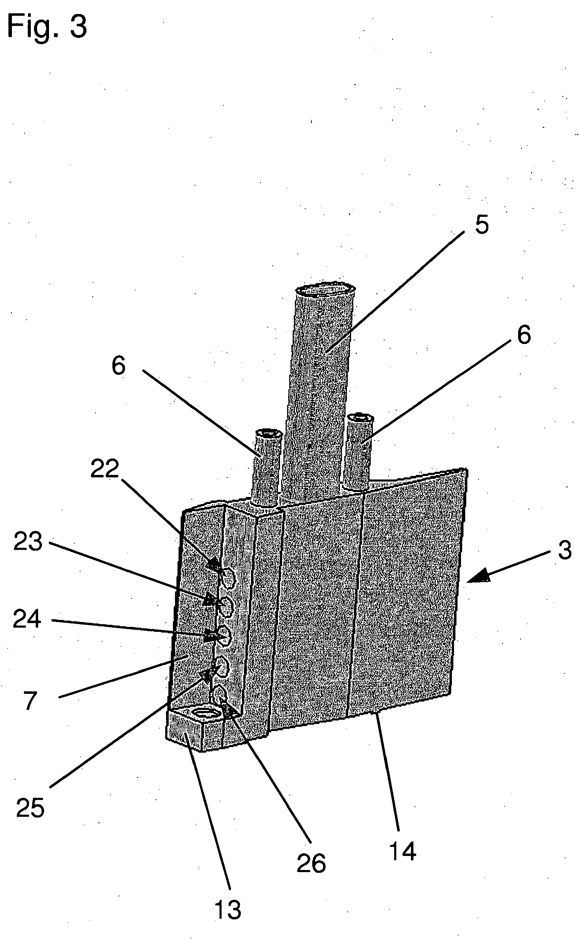

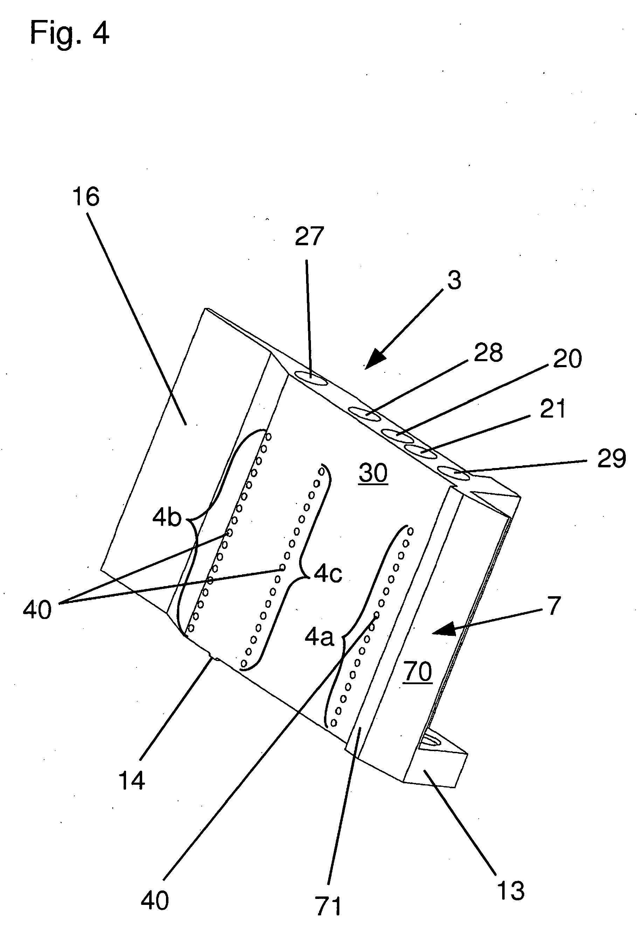

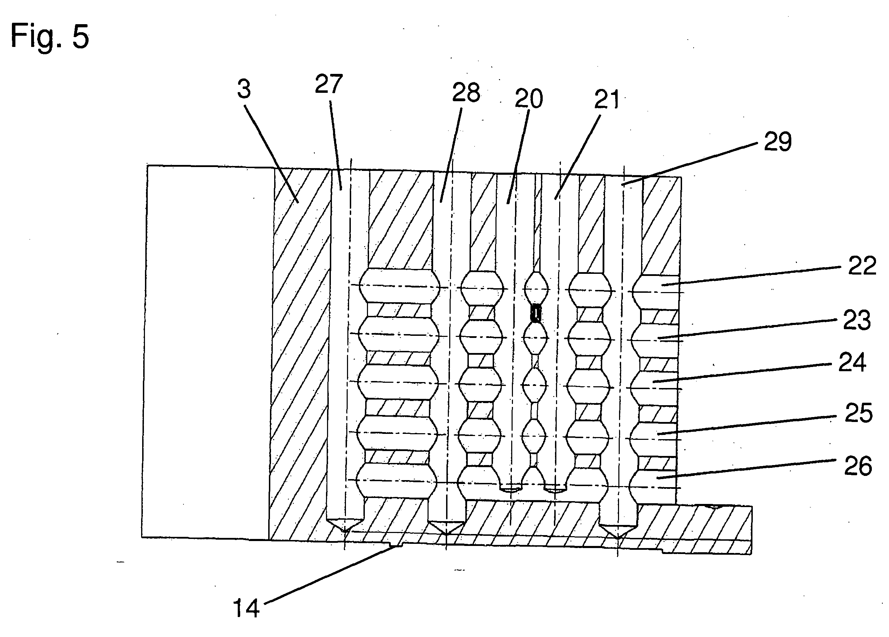

Unter Bezugnahme auf Fig. 2 und 5 soll nachfolgend der Aufbau zweier Düsenkörper 3, die bei der hier offenbarten Düsenanordnung 1 verwendet werden können, näher erläutert werden. Bei dem in Fig. 2 und 3 dargestellten Ausführungsbeispiel weist der Düsenkörper 3 auf einer ebenen Luftaustrittsfläche 30 eine erste Gruppe 4a und eine zweite Gruppe 4b von Luftaustrittsöffnungen 40 und bei dem in Fig. 4 und 5 dargestellten Ausführungsbeispiel darüber hinaus eine dritte Gruppe 4c von Luftaustrittsöffnungen 40 auf. Die Luftaustrittsöffnungen 40 jeder der zwei beziehungsweise drei Gruppen sind in beiden hier vorgestellten Ausführungsbeispielen jeweils in der Einbaulage des Düsenkörpers 3 in vertikaler Richtung voneinander beabstandet übereinander angeordnet. Die beiden Ausführungsbeispiele des Düsenkörpers 3 unterscheiden sich mithin durch ihre Abmessungen und die Anzahl der parallel zueinander orientierten Gruppen 4a, 4b, 4c von Luftaustrittsöffnungen 40. Die Luftaustrittsöffnungen 40 sind zylindrisch geformt und weisen vorzugsweise einen Durchmesser von etwa 1 bis 1,5 mm und eine Tiefe im Düsenkörper 3 von etwa 1,5 mm auf. Dadurch wird erreicht, dass die dem Düsenkörper 3 während des Betriebs zugeführte, unter Druck stehende Heißluft punktuell in die Funktionsschicht des Kantenstreifens 2 eingetragen werden kann, so dass diese wirksam aufgeschmolzen werden kann, bevor der Kantenstreifen 2 auf der Schmalseite des Werkstücks zu Anlage gelangt und stoffschlüssig mit dieser verbunden wird.

Wie in Fig. 4 zu erkennen, weist der Düsenkörper 3 zwei hohlzylindrische Lufteinlasskanäle 20, 21 auf, die sich von dessen Oberseite in vertikaler Richtung erstrecken und vorliegend als Vertikalbohrungen ausgebildet sind. An der Oberseite des Düsenkörpers 3 ist ein Heißluftzufuhrstutzen 5 angeordnet, der vorzugsweise fest mit der Oberseite des Düsenkörpers 3 verschweißt ist und vorliegend eine länglich ovale Querschnittform aufweist, so dass er die Lufteinlassöffnungen der beiden Lufteinlasskanäle 20, 21 umschließt. Über diesen Heißluftzufuhrstutzen 5, der an einen Heißlufterzeuger anschließbar ist, wird dem Düsenkörper 3 während des Betriebs bis etwa 600 °C erwärmte Heißluft unter hohem Druck zugeführt. Diese Heißluft kann durch die beiden Lufteinlasskanäle 20, 21 bis in einen unteren Bereich des Düsenkörpers 3 einströmen. Ferner umfasst der Düsenkörper 3 eine Mehrzahl horizontaler, hohlzylindrischer Luftverteilungskanäle 22 - 26, die sich orthogonal durch die beiden Lufteinlasskanäle 20, 21 und durch zwei (siehe Fig. 2 und 3) beziehungsweise drei (siehe Fig. 2 und 3) sich in vertikaler Richtung erstreckende, ebenfalls hohlzylindrische Luftauslasskanäle 27, 28, 29, die die Luftaustrittsöffnungen 40 umfassen, erstrecken. Dadurch kann sich die zugeführte Heißluft homogen innerhalb des Düsenkörpers 3 verteilen und durch die Luftaustrittsöffnungen 40 der zwei Gruppen 4a, 4b beziehungsweise drei Gruppen 4a, 4b, 4c von Luftaustrittsöffnungen 40 austreten und auf die Funktionsschicht des Kantenstreifens 2 treffen, um die Funktionsschicht zu erwärmen und aufzuschmelzen. Die horizontalen Luftverteilungskanäle 22 - 26 (in diesem Ausführungsbeispiel sind fünf horizontale Luftverteilungskanäle 22 - 26 vorgesehen) können dadurch hergestellt werden, dass in den Düsenkörper 3 entsprechende horizontale Bohrungen eingebracht werden, deren seitliche Öffnungen an der Außenoberfläche, die in Fig. 3 noch zu erkennen sind, anschließend wieder dicht verschweißt werden. Die hohlzylindrischen Luftauslasskanäle 27, 28, 29 sind ebenfalls als Vertikalbohrungen ausgeführt und weisen vorliegend eine etwas größere Erstreckung in vertikaler Richtung als die Lufteinlasskanäle 20, 21 auf. Insbesondere aus Fig. 5 wird deutlich, dass der Düsenkörper 3 auf Grund der Vielzahl von Lufteinlasskanälen 20, 21, Luftverteilungskanälen 22 - 26 und Luftauslasskanälen 27, 28, 29 nahezu die Eigenschaften eines Hohlkörpers aufweist. Wegen der vertikalen Lufteinlasskanäle 20, 21 und Luftauslasskanäle 27, 28, 29 und der sich orthogonal zu diesen erstreckenden Luftverteilungskanäle 22 - 26 weist der Düsenkörper 3 eine relativ geringe Masse auf, so dass der einströmenden Heißluft anfangs nur eine vergleichsweise geringe Menge an Wärmeenergie für das Erwärmen des Materials des Düsenkörpers 3 entzogen wird. Wie oben bereits ausgeführt, muss die Funktionsschicht des Kantenstreifens 2 kurz vor dem Erreichen der ersten Andruckrolle der Kantenstreifenaufbringvorrichtung aktiviert werden, damit er stoffschlüssig mit der Schmalseite des Werkstücks verbunden werden kann. Mit anderen Worten muss die Funktionsschicht des Kantenstreifens 2 wenige Zentimeter vor dem Erreichen des ersten Andruckpunktes, der durch die erste Andruckrolle gebildet wird, aufgeschmolzen und damit erweicht worden sein. Da der innerhalb der Kantenstreifenaufbringvorrichtung zur Verfügung stehende Bauraum sehr klein ist, ermöglicht die relativ schmale konstruktive Ausgestaltung des Düsenkörpers 3 eine zuverlässige, gezielte Wärmezufuhr auf die Funktionsschicht des Kantenstreifens 2. Der Düsenkörper 3 und die dazugehörigen Komponenten stellen sicher, dass beim Passieren des Kantenstreifens 2 eine Art Heißluftkanal entsteht, der die Heißluft bis kurz vor dem Erreichen des ersten Andruckpunktes zwischen dem Kantenstreifen 2 und der Schmalseite des Werkstücks hält. Aus den Luftaustrittsöffnungen 40 der zwei Gruppen 4a, 4b beziehungsweise drei Gruppen 4a, 4b, 4c tritt die Heißluft aus und wird in Richtung des Kantenstreifens 2 sowie des Werkstücks geleitet.

Um eine sichere Führung des Kantenstreifens 2 bei der Vorschubbewegung zu erreichen, weist die Düsenanordnung 1 ferner in einem Einlaufbereich des Kantenstreifens 2 einen abschnittsweise keilförmig angeschrägten, sich in Vorschubrichtung aufweitenden Führungsabschnitt 7 auf, der in diesem Ausführungsbeispiel integral mit dem Düsenkörper 3 ausgebildet ist. Dieser keilartige Führungsabschnitt 7 umfasst einen sich aufweitenden Schrägflächenabschnitt 70 sowie einen sich daran anschließenden, sich in vertikaler Richtung erstreckenden und bezüglich der Luftaustrittsfläche 30 des Düsenkörpers 3 erhabenen, vorzugsweise um etwa 1,5 mm erhabenen Abstandshalteabschnitt 71 auf. Diese vorstehend beschriebene Ausgestaltung des einlaufseitigen Führungsabschnitts 7 mit dem Abstandshalteabschnitt 71 sorgt dafür, dass beim Anliegen des Kantenstreifens 2 kein direkter Kontakt mit der Luftaustrittsfläche 30 des Düsenkörpers 3 besteht, der zu einem Verschmieren der erwärmten und dadurch aufgeschmolzenen Funktionsschicht des Kantenstreifens 2 auf dem Düsenkörper 3 führen könnte. Zudem wird erreicht, dass die Heißluft nicht in den Einlaufbereich des Kantenstreifens 2, sondern nur auf die Funktionsschicht des Kantenstreifens 2 sowie in einen in diesem Ausführungsbeispiel ebenfalls integral mit dem Düsenkörper 3 ausgebildeten, sich abschnittsweise verjüngenden, keilartig geformten Auslaufbereich 16 für den Kantenstreifen 2 in Richtung des Werkstücks strömt.

Wie insbesondere in Fig. 2 zu erkennen, kann ferner ein zusätzliches, sich in horizontaler Richtung erstreckendes Führungsmittel 18 vorgesehen sein, das vorliegend durch einen vorzugsweise etwa 1 mm dicken Stahldraht, der an der dem Kantenstreifen 2 zugewandten Bereich mit dem Düsenkörper 3 verschweißt ist und sich vorzugsweise über die gesamte Länge der Luftaustrittsfläche 30 und des Auslaufbereichs 16 erstreckt, gebildet wird. Dieses Führungsmittel 18 sorgt zusätzlich dafür, dass die Funktionsschicht des Kantenstreifens 2 die Luftaustrittsfläche 30 des Düsenkörpers 3 während des Betriebs nicht berührt.

Auf einer Grundplatte 12 der Kantenstreifenaufbringvorrichtung ist ein plattenförmiges Kantenstreifenführungsmittel 8, das vorzugsweise eine Materialstärke von etwa 1,5 mm aufweist, derart angeordnet, dass ein unterer Randabschnitt des Kantenstreifens 2 zwischen dem Kantenstreifenführungsmittel 8 und der Luftaustrittsfläche 30 des Düsenkörpers 3 geführt werden kann. Um das "Einfädeln" des Kantenstreifens 2 zu erleichtern, ist das Kantenstreifenführungsmittel 8 in einem dem keilartigen Führungsabschnitt 7 gegenüberliegenden Bereich angeschrägt ausgebildet. Für eine Führung eines oberen Randabschnitts des Kantenstreifens 2 ist ein vorliegend ebenfalls plattenförmig ausgebildetes Kantenniederhaltemittel 9 vorgesehen, das vorzugsweise eine Gesamtdicke von etwa 6 mm aufweist und in einem, dem Düsenkörper 3 zugewandten randnahen Abschnitt eine etwa 1,5 mm starke Ausfräsung oder dergleichen aufweist. Der dem Düsenkörper 3 zugewandte Randabschnitt des Kantenniederhaltemittels 9 ist so geformt, dass er an die Außenkontur des Düsenkörpers 3 angepasst ist. In Vorschubrichtung des Kantenstreifens 2 betrachtet weist der Düsenkörper 3 hinter der Luftaustrittsfläche 30 den sich verjüngenden, keilartig geformten Auslaufbereich 16 auf. Dieser dient neben der Führung des Kantenstreifens dazu, den aus dem Kantenstreifen 2, dem Düsenkörper 3 und dem Kantenniederhaltemittel 9 gebildeten Heißluftkanal möglichst lange aufrecht zu erhalten.

Wie in Fig. 1 zu erkennen, wird der Kantenstreifen 2 während des Betriebs der Kantenstreifenaufbringvorrichtung zwischen dem Kantenstreifenführungsmittel 8 und dem Kantenstreifenniederhaltemittel 9 sicher vor dem Düsenkörper 3 hergeführt. Um Beschädigungen, insbesondere das optische Erscheinungsbild beeinträchtigende Kratzer auf der Sichtseite des Kantenstreifens 2, zu vermeiden, erfolgt die Führung mit Hilfe des Kantenstreifenführungsmittels 8 und des Kantenniederhaltemittels 9 vorzugsweise jeweils nur etwa 1,5 mm von der oberen und unteren Kante des Kantenstreifens 2 entfernt. Der Kantenstreifen 2 ist daher bei der Zuführung stets etwa 3 bis 4 mm breiter als die Schmalseite des Werkstücks, auf die der Kantenstreifen 2 aufgebracht werden soll. Nach dem Aufbringen des Kantenstreifens 2 auf die Schmalseite des Werkstücks wird der sich bildende Überstand mittels einer geeignet ausgeführten Abtragungseinrichtung in der Kantenstreifenaufbringvorrichtung spanend abgetragen.

Wie oben erläutert, sind die Düsenkörper 3 vorliegend so ausgeführt, dass sie zwei oder drei Gruppen 4a, 4b, 4c von Luftaustrittsöffnungen 40 aufweisen. Die Ausführungsform des Grundkörpers 3 mit zwei Gruppen 4a, 4b von Luftaustrittsöffnungen 40 ist insbesondere für Kantenstreifenaufbringvorrichtungen geeignet, die Fördergeschwindigkeiten von bis zu 20 m/min haben. Die Ausführungsform des Grundkörpers 3 mit drei Gruppen 4a, 4b, 4c von Luftaustrittsöffnungen 40 ist etwa 15 mm länger und insbesondere für Kantenstreifenaufbringvorrichtungen vorgesehen, die besonders hohe Arbeitsgeschwindigkeiten von mehr als 20 m/min haben, um im Ergebnis eine höhere Wärmeabgabe zu realisieren. Bei einer derartigen Ausführungsform mit drei Gruppen 4a, 4b, 4c von Luftaustrittsöffnungen 40 sind Arbeitsgeschwindigkeiten von etwa 25 m/min ohne besonderen Aufwand realisierbar. Es soll an dieser Stelle angemerkt werden, dass der Düsenkörper 3 grundsätzlich auch so ausgebildet sein kann, dass er mehr als drei Gruppen 4a, 4b, 4c von Luftaustrittsöffnungen 40 aufweist. Die Erstreckung des Düsenkörpers 3 in vertikaler Richtung und die Anzahl der Luftaustrittsöffnungen 40 der mindestens zwei Gruppen 4a, 4b werden an die maximal in der Kantenstreifenaufbringvorrichtung zu verarbeitende Kantenstreifenbreite angepasst.

Um den Heißluftaustritt aus den Luftaustrittsöffnungen 40 regulieren zu können, weist die Düsenanordnung 1 eine der Anzahl der Gruppen 4a, 4b, 4c von Luftaustrittsöffnungen 40 entsprechende Anzahl von Verschlussorganen 6 auf, die vorliegend zylindrisch geformt sind und so ausgebildet sind, dass sie von der Oberseite des Düsenkörpers 3 in die vertikalen Luftauslasskanäle 27, 28, 29 eingesetzt werden und in diesen axial verschoben und in ihrer Arbeitsposition gehalten werden können. Die Verschlussorgane 6 sind an einer vorliegend plattenförmig ausgebildeten Verschlussorganhalterung 10 angebracht, die über ein sich von der Verschlussorganhalterung 10 zu dem Kantenstreifenniederhaltemittel 9 erstreckendes Verbindungsmittel 15 mit dem Kantenstreifenniederhaltemittel 9 verbunden ist. Die Verschlussorgane 6 erstrecken sich in vertikaler Richtung vorzugsweise bis zur Ausfräsung des Kantenstreifenniederhaltemittels 9. Um die Herstellung zu vereinfachen, können die Verschlussorganhalterung 10, das Verbindungsmittel 15 sowie das Kantenstreifenniederhaltemittel 9 integral als einstückiges Bauteil ausgebildet sein.

Abhängig von der Breite des Kantenstreifens 2 können die Luftaustrittsöffnungen 40 mittels der zylindrischen Verschlussorgane 6 selektiv verschlossen werden, so dass aus ihnen keine Heißluft mehr ausströmen kann. Die Verschlussorgane 6 werden dabei so weit in die zylindrischen Luftauslasskanäle 27, 28, 29 eingeführt, dass diejenigen Luftaustrittsöffnungen 40 verschlossen werden, die für die Beaufschlagung der Funktionsschicht des Kantenstreifens 2 mit Heißluft auf Grund dessen Breite nicht benötigt werden. Mit anderen Worten werden die zur Beaufschlagung eines Kantenstreifens 2 vorgegebener Breite nicht benötigten Luftaustrittsöffnungen 40 der zwei beziehungsweise drei Gruppen 4a, 4b, 4c von Luftaustrittsöffnungen 40 durch die Verstellung der zugeordneten Verschlussorgane 6 derart verschlossen, dass der Kantenstreifen 2 nur über seine tatsächliche Breite mit Heißluft beaufschlagt wird. Da die Verschlussorgane 6, die Verschlussorganhalterung 10 sowie das Kantenstreifenniederhaltemittel 9 über das Verbindungsmittel 15 miteinander verbunden sind, ist es durch eine vertikale Verstellung des Kantenstreifenniederhaltemittels 9 auf einfache Weise möglich, die Luftaustrittsöffnungen 40 so zu verschließen, dass nur diejenigen Luftaustrittsöffnungen 40 geöffnet bleiben, die der Funktionsschicht des Kantenstreifens 2 zugewandt sind. Durch Einstellung des Kantenstreifenniederhaltemittels 9 kann die Düsenanordnung 1 somit auf sehr einfache Weise an unterschiedliche breite Kantenstreifen 2 angepasst werden.

Mittels mindestens einer Befestigungsschraube 11 wird die Düsenanordnung 1 mit der Grundplatte 12 der Kantenstreifenaufbringvorrichtung verschraubt. Dazu ist an der von dem Kantenstreifen 2 abgewandten Seite des Führungsabschnitts 7 ein Sockelmittel 13 mit einer Bohrung ausgebildet, durch die die Befestigungsschraube 11 geführt und anschließend mit der Grundplatte 12 verschraubt werden kann. Der Düsenkörper 3 steht im Bereich des Führungsabschnitts 7 mit der Grundplatte 12 der Kantenstreifenaufbringvorrichtung in Kontakt. Ansonsten ist der Düsenkörper 3 bis auf einen relativ kleinen Stützabschnitt 14 um etwa 0,5 mm freigefräst. Dadurch wird erreicht, dass der Wärmeeintrag von dem Düsenkörper 3 in die Grundplatte 12 wirksam verringert werden kann.

Die hier vorgestellte Düsenanordnung 1 zeichnet sich insbesondere durch eine kompakte Bauform aus, die es ermöglicht, dass herkömmliche Kantenstreifenaufbringvorrichtungen auf einfache Weise mit der Düsenanordnung 1 ausgerüstet werden können. Ferner ist es wahlweise möglich, dass die mit der Düsenanordnung 1 ausgestattete Kantenstreifenaufbringvorrichtung herkömmlich mit einer Laservorrichtung zum Aktivieren der Funktionsschicht des Kantenstreifens 2 oder aber mit herkömmlichen Kantenstreifen, die mittels eines Heißklebers mit den Schmalseiten eines Werkstücks verbunden werden, betrieben werden kann.

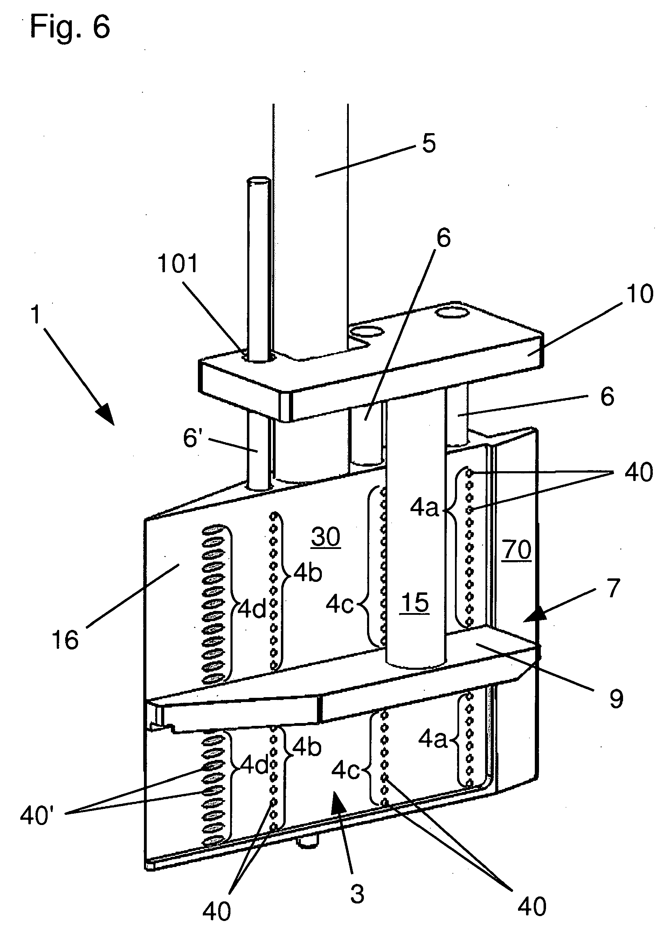

Unter Bezugnahme auf Fig. 6 soll nachfolgend ein weiteres Ausführungsbeispiel einer Düsenanordnung 1 näher erläutert werden, die sich in besonders vorteilhafter Weise für die Aktivierung herkömmlicher, einseitig mit einem Heißkleber (Schmelzkleber) versehener Kantenstreifen 2 oder Werkstücke eignet. Der grundlegende Aufbau des Düsenkörpers 3 weist zahlreiche Gemeinsamkeiten mit den oben unter Bezugnahme auf Fig. 1 bis 5 beschriebenen Varianten auf, so dass nachfolgend in erster Linie auf die Unterschiede eingegangen werden soll.

Der Düsenkörper 3 weist zusätzlich zu den drei Gruppen 4a, 4b, 4c von Luftaustrittsöffnungen 40 eine vierte Gruppe 4d von Luftaustrittsöffnungen 40' auf, die - wie die zweite Gruppe 4b von Luftaustrittsöffnungen 40 - mit dem ersten Luftauslasskanal 27 in Strömungsverbindung steht. Diese vierte Gruppe von Luftaustrittsöffnungen 40' ist in dem sich abschnittsweise verjüngenden, keilartig geformten Auslaufbereich 16 für den Kantenstreifen 2 ausgebildet. Die Luftaustrittsöffnungen 40' der vierten Gruppe 4d sind in dem hier gezeigten Ausführungsbeispiel oval geformt. Sie können wahlweise aber auch kreisrund ausgebildet sein. Die Luftaustrittsöffnungen 40' der vierten Gruppe 4d und die Luftaustrittsöffnungen 40 der zweiten Gruppe 4b dienen vorliegend ausschließlich dem Zweck der Nachaktivierung des Schmelzklebers des Kantenstreifen 2 für die letzten etwa 10 cm des zu bearbeitenden Werkstücks. Durch diese Nachaktivierung kann das Klebeergebnis wesentlich verbessert werden, so dass beim Verleimen nahezu eine so genannte Nullfuge und damit ein optisch sehr hochwertiges Verleimungsbild erhalten werden kann.

Um den Heißluftaustritt aus den Luftaustrittsöffnungen 40, 40' regulieren zu können, weist die Düsenanordnung 1 in diesem Ausführungsbeispiel drei Verschlussorgane 6, 6' auf, die vorliegend zylindrisch geformt sind und so ausgebildet sind, dass sie von der Oberseite des Düsenkörpers 3 in die vertikalen Luftauslasskanäle 27, 28, 29 eingesetzt werden und in diesen axial verschoben und in ihrer Arbeitsposition gehalten werden können. Ein erstes und zweites Verschlussorgan 6 sind fest an der Verschlussorganhalterung 10 angebracht, die über ein sich von der Verschlussorganhalterung 10 zu dem Kantenstreifenniederhaltemittel 9 erstreckendes Verbindungsmittel 15 mit dem Kantenstreifenniederhaltemittel 9 verbunden ist. Diese beiden Verschlussorgane 6 erstrecken sich in vertikaler Richtung vorzugsweise bis zur Ausfräsung des Kantenstreifenniederhaltemittels 9. Um die Herstellung zu vereinfachen, können die Verschlussorganhalterung 10, das Verbindungsmittel 15 sowie das Kantenstreifenniederhaltemittel 9 wiederum als einstückiges Bauteil ausgebildet sein.

Das dritte zylindrische Verschlussorgan 6' ist separat - insbesondere vermittels eines Luftzylinders - von den beiden übrigen Verschlussorganen betätigbar und erstreckt sich durch eine kreisrunde Bohrung 101 der Verschlussorganhalterung 10 hindurch und ist somit nicht fest mit dieser verbunden. Dadurch wird die separate Betätigbarkeit des dritten zylindrischen Verschlussorgans 6' zum selektiven Öffnen und Schließen des ersten Luftaustrittskanals 27, der mit den Luftaustrittsöffnungen 40 der zweiten Gruppe 4b und mit den Luftaustrittsöffnungen 40' der vierten Gruppe 4d in Strömungsverbindung steht, realisiert.

Während des Betriebs der Kantenstreifenaufbringvorrichtung und des Aufbringens des Kantenstreifens 2 auf das Werkstück verbleibt das dritte Verschlussorgan 6' zunächst in seiner "unteren" Stellung (Schließstellung), in der es den Heißluftaustritt aus der zweiten Gruppe 4b und der vierten Gruppe 4d von Luftaustrittsöffnungen 40, 40' verhindern kann. Während des Betriebs strömt die Heißluft also zunächst nur durch die beiden übrigen Gruppen 4a, 4c von Luftaustrittsöffnungen 40 auf die mit der Heißluft zu erwärmende Fläche des Kantenstreifens. Der Betrieb der Kantenstreifenaufbringvorrichtung wird so gesteuert, dass der erste Luftaustrittskanal 27 durch axiales Verschieben des dritten Verschlussorgans 6' in vertikaler Richtung nach oben erst dann geöffnet wird, wenn die letzten etwa 10 cm des Werkstücks die Düsenanordnung 1 der Kantenstreifenaufbringvorrichtung passieren. Dann strömt die Heißluft auch durch die Luftaustrittsöffnungen 40 der zweiten Gruppe 4b sowie durch die Luftaustrittsöffnungen 40' der vierten Gruppe 4d. Dadurch wird erreicht, dass der Kantenstreifen 2 zur Nachaktivierung auch im Bereich der letzten etwa 6 cm bis 10 cm des Werkstücks zuverlässig und in einer hohen Qualität verleimt werden können. Ansonsten würden die letzten circa 6 cm bis 10 cm des auf das Werkstück aufzubringenden Kantenstreifens 2 nur zufriedenstellend und somit nicht optimal erwärmt und aktiviert. Um ein Überhitzen von weiteren Anlagenteilen (zum Beispiel Andruckrollen oder dergleichen) zu vermeiden, wird das dritte Verschlussorgan 6' anschließend sofort wieder in seine Schließstellung überführt, so dass keine Heißluft mehr aus den Luftaustrittsöffnungen 40, 40' der zweiten Gruppe 4b und der vierten Gruppe 4d austreten kann.

Das in Fig. 6 veranschaulichte Prinzip kann auch bei der in Fig. 2 dargestellten Düsenanordnung 3 zum Einsatz kommen, indem in den keilartig geformten Auslaufbereich 16 entsprechende Luftaustrittsöffnungen 40' eingebracht werden und ein in der vorstehend beschriebenen Weise separat bewegbares Verschlussorgan 6' vorgesehen wird.

Bei bestimmten anlagespezifischen Gegebenheiten kann der zur Verfügung stehende Platz möglicherweise nicht ausreichend sein, um in dem keilartig geformten Auslaufbereich 16 entsprechende (zusätzliche) Luftaustrittsöffnungen 40' vorzusehen. Um eine vergleichbare Wirkung zu erhalten, kann der zweiten Gruppe 4b von Luftaustrittsöffnungen 40 ein Verschlussorgan 6' zugeordnet werden, das separat von dem weiteren Verschlussorgan 6/den weiteren (simultan bewegbaren) Verschlussorganen 6 bewegbar ist und in der vorstehend beschriebenen Weise ausgeführt ist.

## Patentansprüche

1. Düsenanordnung (1) für eine Kantenstreifenaufbringvorrichtung zur Beaufschlagung eines kleberlosen, wärmeaktivierbaren oder mit Heißkleber beschichteten Kantenstreifens (2) oder Werkstücks mit Heißluft, umfassend einen Düsenkörper (3) mit
- mindestens einem Lufteinlasskanal (20, 21), der an einen Heißlufterzeuger anschließbar ist, so dass dem Düsenkörper (3) während des Betriebs der Kantenstreifenaufbringvorrichtung unter Druck stehende Heißluft zugeführt werden kann,
- mindestens zwei Gruppen (4a, 4b, 4c) von Luftaustrittsöffnungen (40), wobei die Luftaustrittsöffnungen (40) auf einer dem Kantenstreifen (2) zugewandten Luftaustrittsfläche (30) des Düsenkörpers (3) in vertikaler Richtung senkrecht zu einer Vorschubrichtung des Kantenstreifens (2) voneinander beabstandet ausgebildet sind und mit dem mindestens einen Lufteinlasskanal (20, 21) in Strömungsverbindung stehen, so dass die mindestens zwei Gruppen (4a, 4b, 4c) von Luftaustrittsöffnungen (40) in Vorschubrichtung des Kantenstreifens (2) voneinander beabstandet sind und die dem Düsenkörper (3) zugeführte Heißluft aus den Luftaustrittsöffnungen (40) ausströmen kann und eine wärmeaktivierbare Funktionsschicht des Kantenstreifens (2) beaufschlagen kann,
- einer der Anzahl der Gruppen (4a, 4b, 4c) von Luftaustrittsöffnungen (40) entsprechenden Anzahl von Verschlussorganen (6, 6'), die so ausgebildet sind, dass zumindest einige der Luftaustrittsöffnungen (40) wahlweise geöffnet oder geschlossen werden können, so dass die Heißluftaustrittsströmung an unterschiedliche Breiten des zugeführten Kantenstreifens (2) anpassbar ist,
**dadurch gekennzeichnet, dass**
- der Düsenkörper (3) eine der Anzahl der Gruppen (4a, 4b, 4c) von Luftaustrittsöffnungen (40) entsprechende Anzahl von vorzugsweise hohlzylindrisch ausgebildeten Luftauslasskanälen (27, 28, 29) aufweist, die mit dem mindestens einen Lufteinlasskanal (20, 21) in Strömungsverbindung stehen und die Luftaustrittsöffnungen (40) umfassen,
- die Verschlussorgane (6, 6') so ausgebildet sind, dass sie in den Luftauslasskanälen (27, 28, 29) zum Verschließen zumindest einiger der Luftaustrittsöffnungen (40) axial geführt werden können, und
- die Düsenanordnung (1) eine Verschlussorganhalterung (10) umfasst, an der die Verschlussorgane (6, 6') derart angebracht sind, dass sie simultan in den Luftauslasskanälen (27, 28, 29) verstellbar sind, oder eine Verschlussorganhalterung (10) umfasst, an der die Verschlussorgane (6, 6') derart angebracht sind, dass zumindest eines der Verschlussorgane (6') unabhängig von den übrigen Verschlussorganen (6) verstellbar ist.

2. Düsenanordnung (1) nach Anspruch 1, **dadurch gekennzeichnet, dass** der Düsenkörper (3) eine Mehrzahl vorzugsweise hohlzylindrischer Luftverteilungskanäle (22 - 26), die sich in Querrichtung durch den mindestens einen Lufteinlasskanal (20, 21) und durch die Luftauslasskanäle (27, 28, 29) erstrecken, umfasst.

3. Düsenanordnung (1) nach einem der Ansprüche 1 oder 2, **dadurch gekennzeichnet, dass** die Düsenanordnung (1) ein Kantenstreifenniederhaltemittel (9) aufweist, das so ausgebildet ist, dass es eine obere Kante des Kantenstreifens (2) an dem Düsenkörper (3) entlang führen kann.

4. Düsenanordnung (1) nach Anspruch 3, **dadurch gekennzeichnet, dass** die Düsenanordnung (1) ein Verbindungsmittel (15) umfasst, mittels dessen das Kantenstreifenniederhaltemittel (9) und die Verschlussorganhalterung (10) miteinander verbunden sind.

5. Düsenanordnung (1) nach einem der Ansprüche 1 bis 4, **dadurch gekennzeichnet, dass** der Düsenkörper (3) in einem Einlaufbereich des Kantenstreifens (2) einen sich in Vorschubrichtung aufweitenden, vorzugsweise abschnittsweise keilförmig angeschrägten Führungsabschnitt (7) aufweist.

6. Düsenanordnung (1) nach Anspruch 5, **dadurch gekennzeichnet, dass** der Führungsabschnitt (7) einen sich in Vorschubrichtung des Kantenstreifens (2) aufweitenden Schrägflächenabschnitt (70) sowie einen sich daran anschließenden, sich in vertikaler Richtung erstreckenden und bezüglich der Luftaustrittsfläche (30) des Düsenkörpers (3) erhabenen, vorzugsweise um etwa 1,5 mm erhabenen, Abstandshalteabschnitt (71) aufweist.

7. Düsenanordnung (1) nach einem der Ansprüche 1 bis 6, **dadurch gekennzeichnet, dass** der Düsenkörper (3) in Vorschubrichtung des Kantenstreifens (2) hinter der Luftaustrittsfläche (30) einen sich verjüngenden, vorzugsweise zumindest abschnittsweise keilartig geformten, Auslaufbereich (16) aufweist.

8. Düsenanordnung (1) nach einem der Ansprüche 1 bis 7, **dadurch gekennzeichnet, dass** die Düsenanordnung (1) ein sich in horizontaler Richtung erstreckendes Führungsmittel (18) für den Kantenstreifen (2) aufweist.

9. Düsenanordnung (1) nach Anspruch 8, **dadurch gekennzeichnet, dass** das Führungsmittel (18) durch einen Stahldraht gebildet ist, der an einem dem Kantenstreifen (2) zugewandten Bereich mit dem Düsenkörper (3) verbunden ist.

10. Düsenanordnung nach Anspruch 9, **dadurch gekennzeichnet, dass** sich der Stahldraht über die gesamte Länge der Luftaustrittsfläche (30) und des Auslaufbereichs (16) des Düsenkörpers (3) erstreckt.

11. Kantenstreifenaufbringvorrichtung, umfassend mindestens eine Düsenanordnung nach einem der Ansprüche 1 bis 10.

## Claims

1. Nozzle arrangement (1) for an edge-strip application device, for exposing an adhesive-free, heat-activatable edge strip (2) or workpiece or an edge strip (2) or workpiece that is coated with hotmelt adhesive to hot air, comprising a nozzle body (3) having
- at least one air-inlet duct (20, 21) which is connectable to a hot-air generator such that pressurized hot air can be fed to the nozzle body (3) during operation of the edge-strip application device,
- at least two groups (4a, 4b, 4c) of air-outlet openings (40), wherein the air-outlet openings (40) are configured in a manner spaced apart from one another in the vertical direction perpendicular to an advancing direction of the edge strip (2) on an air-outlet surface (30), facing the edge strip (2), of the nozzle body (3) and are connected in terms of flow to the at least one air-inlet duct (20, 21) such that the at least two groups (4a, 4b, 4c) of air-outlet openings (40) are spaced apart from one another in the advancing direction of the edge strip (2) and the hot air fed to the nozzle body (3) can flow out of the air-outlet openings (40) and can be exposed to a heat-activatable functional layer of the edge strip (2),
- a number of closure members (6, 6') that corresponds to the number of groups (4a, 4b, 4c) of air-outlet openings (40), said closure members (6, 6') being configured such that at least some of the air-outlet openings (40) can be selectively opened or closed so that the hot air outlet flow can be adapted to different widths of the fed edge strip (2), **characterized in that**
- the nozzle body (3) has a number of air-outlet ducts (27, 28, 29), configured preferably in a hollow-cylindrical manner, that corresponds to the number of groups (4a, 4b, 4c) of air-outlet openings (40), said air-outlet ducts (27, 28, 29) being connected in terms of flow to the at least one air-inlet duct (20, 21) and comprising the air-outlet openings (40),
- the closure members (6, 6') are configured such that they can be guided axially into the air-outlet ducts (27, 28, 29) in order to close at least some of the air-outlet openings (40), and
- the nozzle arrangement (1) comprises a closure-member holder (10) on which the closure members (6, 6') are fitted such that they are adjustable simultaneously in the air-outlet ducts (27, 28, 29), or comprises a closure-member holder (10) on which the closure members (6, 6') are fitted such that at least one of the closure members (6') is adjustable independently of the remaining closure members (6).

2. Nozzle arrangement (1) according to Claim 1, **characterized in that** the nozzle body (3) comprises a plurality of preferably hollow-cylindrical air-distribution ducts (22-26) which extend in the transverse direction through the at least one air-inlet duct (20, 21) and through the air-outlet ducts (27, 28, 29).

3. Nozzle arrangement (1) according to one of Claims 1 and 2, **characterized in that** the nozzle arrangement (1) has an edge-strip hold-down means (9) which is configured such that it can guide an upper edge of the edge strip (2) along the nozzle body (3).

4. Nozzle arrangement (1) according to Claim 3, **characterized in that** the nozzle arrangement (1) comprises a connecting means (15) by means of which the edge-strip hold-down means (9) and the closure-member holder (10) are connected together.

5. Nozzle arrangement (1) according to one of Claims 1 to 4, **characterized in that** the nozzle body (3) has, in an entry region of the edge strip (2), a guiding section (7) that widens in the advancing direction and is preferably beveled sectionally in a wedge-shaped manner.

6. Nozzle arrangement (1) according to Claim 5, **characterized in that** the guiding section (7) has a sloping surface section (70) that widens in the advancing direction of the edge strip (2), and a spacer section (71) that adjoins said sloping surface section (70), extends in the vertical direction and is raised, preferably by about 1.5 mm, with respect to the air-outlet surface (30) of the nozzle body (3).

7. Nozzle arrangement (1) according to one of Claims 1 to 6, **characterized in that**, downstream of the air-outlet surface (30) in the advancing direction of the edge strip (2), the nozzle body (3) has an exit region (16) that narrows and is preferably formed at least sectionally in a wedge-like manner.

8. Nozzle arrangement (1) according to one of Claims 1 to 7, **characterized in that** the nozzle arrangement (1) has a guiding means (18), extending in the horizontal direction, for the edge strip (2).

9. Nozzle arrangement (1) according to Claim 8, **characterized in that** the said guiding means (18) is formed by a steel wire which is connected to the nozzle body (3) in a region facing the edge strip (2).

10. Nozzle arrangement according to Claim 9, **characterized in that** the steel wire extends along the entire length of the air-outlet surface (30) and of the exit region (16) of the nozzle body (3).

11. Edge-strip application device, comprising at least one nozzle arrangement according to one of Claims 1 to 10.

## Revendications

1. Agencement de tuyère (1) pour un dispositif de revêtement de bandes de bord pour solliciter avec de l'air chaud une bande de bord (2) sans adhésif, activable par la chaleur ou revêtue avec un pistolet à colle, ou une pièce, comprenant un corps de tuyère (3) avec
- au moins un canal d'entrée d'air (20, 21) qui peut être raccordé à un générateur d'air chaud de telle sorte que de l'air chaud sous pression puisse être acheminé au corps de tuyère (3) pendant le fonctionnement du dispositif de revêtement de bandes de bord,
- au moins deux groupes (4a, 4b, 4c) d'ouvertures de sortie d'air (40), les ouvertures de sortie d'air (40) étant réalisées à distance les unes des autres sur une surface de sortie d'air (30) du corps de tuyère (3) tournée vers la bande de bord (2) dans la direction verticale perpendiculairement à une direction d'avance de la bande de bord (2) et étant en liaison d'écoulement avec l'au moins un canal d'entrée d'air (20, 21) de telle sorte que les au moins deux groupes (4a, 4b, 4c) d'ouvertures de sortie d'air (40) soient espacés les uns des autres dans la direction d'avance de la bande de bord (2) et que l'air chaud acheminé au corps de tuyère (3) puisse s'échapper des ouvertures de sortie d'air (40) et puisse solliciter une couche fonctionnelle de la bande de bord (2) pouvant être activée par la chaleur,
- un nombre d'organes de fermeture (6, 6') correspondant au nombre des groupes (4a, 4b, 4c) d'ouvertures de sortie d'air (40), qui sont réalisés de telle sorte qu'au moins certaines des ouvertures de sortie d'air (40) puissent être ouvertes ou fermées de manière sélective de telle sorte que l'écoulement de sortie d'air chaud puisse être adapté à différentes largeurs de la bande de bord acheminée (2),
**caractérisé en ce que**
- le corps de tuyère (3) présente un nombre de canaux de sortie d'air (27, 28, 29) de préférence réalisés sous forme cylindrique creuse correspondant au nombre des groupes (4a, 4b, 4c) d'ouvertures de sortie d'air (40), les canaux de sortie d'air étant en liaison d'écoulement avec l'au moins un canal d'entrée d'air (20, 21) et comprenant les ouvertures de sortie d'air (40),
- les organes de fermeture (6, 6') sont réalisés de telle sorte qu'ils puissent être guidés axialement dans les canaux de sortie d'air (27, 28, 29) pour fermer au moins certaines des ouvertures de sortie d'air (40), et
- l'agencement de tuyère (1) comprend une fixation d'organes de fermeture (10) sur laquelle sont montés les organes de fermeture (6, 6') de telle sorte qu'ils puissent être déplacés simultanément dans les canaux de sortie d'air (27, 28, 29) ou comprend une fixation d'organes de fermeture (10) sur laquelle sont montés les organes de fermeture (6, 6') de telle sorte qu'au moins l'un des organes de fermeture (6') puisse être déplacé indépendamment des autres organes de fermeture (6).

2. Agencement de tuyère (1) selon la revendication 1, **caractérisé en ce que** le corps de tuyère (3) comprend une pluralité de canaux de distribution d'air de préférence cylindriques creux (22-26), qui s'étendent dans la direction transversale à travers l'au moins un canal d'entrée d'air (20, 21) et à travers les canaux de sortie d'air (27, 28, 29).

3. Agencement de tuyère (1) selon l'une quelconque des revendications 1 ou 2, **caractérisé en ce que** l'agencement de tuyère (1) présente un moyen de maintien vers le bas des bandes de bord (9) qui est réalisé de manière à pouvoir guider un bord supérieur de la bande de bord (2) le long du corps de tuyère (3).

4. Agencement de tuyère (1) selon la revendication 3, **caractérisé en ce que** l'agencement de tuyère (1) comprend un moyen de connexion (15) au moyen duquel le moyen de maintien vers le bas des bandes de bord (9) et la fixation d'organes de fermeture (10) sont connectés l'un à l'autre.

5. Agencement de tuyère (1) selon l'une quelconque des revendications 1 à 4, **caractérisé en ce que** le corps de tuyère (3) présente, dans une région d'entrée de la bande de bord (2), une portion de guidage (7) s'élargissant dans la direction d'avance, de préférence en partie biseautée en forme de coin.

6. Agencement de tuyère (1) selon la revendication 5, **caractérisé en ce que** la portion de guidage (7) présente une portion de surface oblique (70) s'élargissant dans la direction d'avance de la bande de bord (2) ainsi qu'une portion de maintien à distance (71) s'y raccordant, s'étendant dans la direction verticale et rehaussée par rapport à la surface de sortie d'air (30) du corps de tuyère (3), de préférence rehaussée d'environ 1,5 mm.

7. Agencement de tuyère (1) selon l'une quelconque des revendications 1 à 6, **caractérisé en ce que** le corps de tuyère (3) présente, derrière la surface de sortie d'air (30) dans la direction d'avance de la bande de bord (2), une région de sortie (16) se rétrécissant, de préférence formée au moins en partie en forme de coin.

8. Agencement de tuyère (1) selon l'une quelconque des revendications 1 à 7, **caractérisé en ce que** l'agencement de tuyère (1) présente un moyen de guidage (18) pour la bande de bord (2) s'étendant dans la direction horizontale.

9. Agencement de tuyère (1) selon la revendication 8, **caractérisé en ce que** le moyen de guidage (18) est formé par un fil d'acier qui est connecté au corps de tuyère (3) au niveau d'une région tournée vers la bande de bord (2).

10. Agencement de tuyère selon la revendication 9, **caractérisé en ce que** le fil d'acier s'étend sur toute la longueur de la surface de sortie d'air (30) et de la région de sortie (16) du corps de tuyère (3).

11. Dispositif de revêtement de bandes de bord comprenant au moins un agencement de tuyère selon l'une quelconque des revendications 1 à 10.
